# EUROPÄISCHE PATENTSCHRIFT

(11) **EP 2 109 924 B1**
(45) Veröffentlichungstag und Bekanntmachung des Hinweises auf die Patenterteilung: **16.06.2010**
(21) Anmeldenummer: 08707893.7
(22) Anmeldetag: 14.01.2008
(51) Int. Cl.: H02B 13/025

(54) **ELEKTRISCHE ANLAGE, INSBESONDERE MITTELSPANNUNGSSCHALTANLAGE**
ELECTRICAL SYSTEM, IN PARTICULAR MEDIUM VOLTAGE SWITCHGEAR
INSTALLATION ELECTRIQUE, EN PARTICULIER COMMUTATEUR A MOYENNE TENSION

(30) Priorität: 16.01.2007 DE 102007003639
(43) Veröffentlichungstag der Anmeldung: 21.10.2009
(73) Patentinhaber: Siemens Aktiengesellschaft, 80333 München (DE)
(72) Erfinder: MASCHEK, Jürgen, 55218 Ingelheim (DE); SAPCI, Ahmet, 34724 Istanbul (TR)
(86) Internationale Anmeldenummer: PCT/EP2008/050349
(87) Internationale Veröffentlichungsnummer: WO 2008/087120

(56) Entgegenhaltungen:
- DE-U- 7 217 567
- DE-U1- 9 102 514
- US-B1- 6 407 331

## Beschreibung

Die Erfindung betrifft eine elektrische Anlage, insbesondere eine Mittelspannungsschaltanlage, wie sie in der als Stand der Technik geltenden älteren deutschen Patentanmeldung 10 2005 056 189.6 beschrieben ist. Die dort beschriebene elektrische Anlage weist mehrere metallgekapselte Funktionsmodule und einen sich parallel zu einer Frontseite der elektrischen Anlage erstreckenden, jeweils einseitig geschlossenen Druckentlastungskanal auf. Der Druckentlastungskanal umfasst mindestens eine bodenseitige Einströmöffnung zur Verbindung des jeweiligen Funktionsmoduls mit dem Druckentlastungskanal sowie eine dachseitige Austrittsöffnung. Die dachseitige Austrittsöffnung ist durch mehrere quer zu dem Druckentlastungskanal verlaufende Austrittsschlitze gebildet, welche mittels über den Austrittsschlitzen beabstandet angeordneter Abdeckbleche mit einer Breite, die gleich der Breite der Austrittsschlitze ist, abgedeckt sind.

Aufgabe der vorliegenden Erfindung ist es, eine elektrische Anlage der eingangs erwähnten Ausführung weiterzubilden, welche bei einem einfachen Aufbau eine Gefährdung für Personen im Umgebungsbereich der Anlage reduziert.

Erfindungsgemäß gelöst wird diese Aufgabe bei einer elektrischen Anlage, insbesondere einer Mittelspannungsschaltanlage, der eingangs erwähnten Art dadurch, dass mindestens eine Ablenkplatte an der elektrischen Anlage oder dem Druckentlastungskanal befestigt ist, den Druckentlastungskanal teilweise abdeckt und über eine Sollbiegestelle verfügt.

Bei einer solchen Anlage werden in vorteilhafter Weise die bei einem Lichtbogen entstehenden heißen Gase gefahrlos für die Anlage und im Umgebungsbereich befindliche Menschen abgeführt, indem die beim Austreten über die Austrittsschlitze an den Abdeckblechen gestreuten Gase zu einem Biegen der mindestens einen Ablenkplatte an der Sollbiegestelle führt, so dass einerseits in vorteilhafter Weise eine Ablenkung der Gase in den Raum über der Schaltanlage gewährleistet und insbesondere eine Streuung der Gase in den die Schaltanlage umgebenden Raum wirksam verhindert ist, und andererseits ein Teil der Druckenergie in Verformungsenergie umgewandelt wird. Die mindestens eine Ablenkplatte ist dabei in vorteilhafter Weise an einer Vorder- oder einer Rückseite oder an Seitenbereichen der elektrischen Anlage oder an dem Druckentlastungskanal befestigt, wobei bei mehreren Ablenkplatten verschiedene Befestigungsbereiche bzw. Kombinationen denkbar sind.

Besonders vorteilhaft ist die Sollbiegestelle zum Biegen der mindestens einen Ablenkplatte bis zu einer senkrechten Position beim Auftreten eines Druckstoßes in der elektrischen Anlage ausgebildet. Dadurch wird besonders wirksam und damit vorteilhaft eine Streuung der Gase in den die Schaltanlage umgebenden Raum verhindert. Die Sollbiegestelle kann dabei unterschiedlich realisiert sein, beispielsweise durch eine Materialschwächung, eine Prägung, Perforation oder dergleichen.

In einer bevorzugten Ausführungsform weist der Druckentlastungskanal mindestens an den Seitenbereichen jedes Funktionsmoduls jeweils einen Austrittsschlitz auf. Durch derartig platzierte Austrittsschlitze wird in vorteilhafter Weise die mechanische Festigkeit des Druckentlastungskanals an seiner Dachseite weitgehend erhalten.

In einer vorteilhaften Ausgestaltung sind die Austrittsschlitze zwischen benachbarten Funktionsmodulen mittels eines gemeinsamen Abdeckblechs abgedeckt. Durch eine solche Anordnung wird in einfacher Weise eine Abdeckung dieser Austrittsschlitze realisiert.

In weiterer Ausgestaltung der Erfindung weist eine Dachseite des Druckentlastungskanals jeweils ein Prellblech für jedes Funktionsmodul auf, und jedes Prellblech weist eine geringere Breite als die Breite der Funktionsmodule auf. Durch die geringere Breite werden in einfacher Weise die Austrittsschlitze zwischen den Funktionsmodulen und an den Seitenbereichen ausgebildet, wobei die Prellbleche einen Druckstoß im Falle eines aufgetretenen Lichtbogens in einem Funktionsmodul vorteilhaft aufnehmen, indem das Prellblech sich verformt und so die Druckenergie in Verformungsenergie umwandelt und abbaut.

In vorteilhafter Ausgestaltung sind die Prellbleche den Druckentlastungskanal front- und rückseitig abdichtend angebracht und derart angeordnet, dass sie jeweils mittig bezüglich der Frontseite der Funktionsmodule liegen. Durch die mittige Lage werden in vorteilhafter Weise beidseitig am jeweiligen Funktionsmodul Austrittsschlitze ausgebildet.

In einer bevorzugten Ausgestaltung sind die Abdeckbleche jeweils mittels einer Vielzahl von Stegen unter Ausbildung von seitlichen Austrittsöffnungen an den Prellblechen befestigt und an endseitigen Abdeckblechen des Druckentlastungskanals Kanalverschlussbleche angebracht. Bei einer derartigen Befestigung werden in einfacher Weise zwischen den Stegen seitliche Austrittsöffnungen für das im Druckentlastungskanal in einem Störungsfall vorhandene Gas realisiert, und der Druckentlastungskanal ist in einfacher Weise endseitig verschlossen.

In weiterer Ausgestaltung der Erfindung sind die Kanalverschlussbleche von Teilen der Gehäusewände des mindestens einen Funktionsmoduls gebildet. Durch die Gehäusewände sind die Kanalverschlussbleche in einfacher Weise ausgebildet.

In einer bevorzugten Ausführungsform weist der Druckentlastungskanal einen Boden mit der mindestens einen bodenseitigen Einströmöffnung auf und ist mit seinem Boden fest mit dem mindestens einen Funktionsmodul verbunden. Durch den Boden ist der Druckentlastungskanal vorteilhaft als separates Modul für die erfindungsgemäße elektrische Anlage ausführbar.

In weiterer Ausgestaltung der Erfindung liegt ein vertikaler Abstand zwischen dem jeweiligen Abdeckblech und den zugeordneten Prellblechen zwischen 40 mm und 60 mm. Bei einem solchen Abstand wird in vorteilhafter Weise ein aus dem Druckentlastungskanal austretender Gasstrom durch das Abdeckblech in die Umgebung derart gestreut, dass einerseits sowohl ein Zurückreflektieren des Gasstromes in den Druckentlastungskanal und andererseits ein gerichtetes Austreten des Gases verhindert werden.

Besonders bevorzugt beträgt der vertikale Abstand zwischen dem jeweiligen Abdeckblech und den zugeordneten Prellblechen 50 mm. In einer Reihe von Versuchen hat sich ein solcher Abstand als besonders vorteilhaft für eine Streuung des Gasstromes und damit für ein ungerichtetes Austreten erwiesen.

In einer bevorzugten Ausführungsform weisen die Prellbleche eine Stärke von 2 mm auf. Vorteilhaft bei einer derartigen Stärke des Prellbleches ist eine tonnenartige Verformung des Prellbleches bei einem auftretenden Druckstoß, so dass die Druckenergie in Verformungsenergie umgewandelt und abgebaut wird, ohne die Umgebung der Anlage dabei zu schädigen.

In einer bevorzugten Ausgestaltung der elektrischen Anlage weist der Druckentlastungskanal einen rechteckigen Querschnitt auf. Ein rechteckiger Querschnitt bietet in vorteilhafter Weise ein möglichst großes Expansionsvolumen des Druckentlastungskanals über den Funktionsmodulen.

Die Erfindung wird im Folgenden anhand der Zeichnung und eines Ausführungsbeispiels mit Bezug auf die beiliegenden Figuren näher erläutert.

Es zeigen:
- Figur 1: einen Querschnitt durch ein Funktionsmodul in einem Ausführungsbeispiel der erfindungsgemäßen elektrischen Anlage mit einem Ausführungsbeispiel des erfindungsgemäßen Druckentlastungskanals;
- Figur 2: eine perspektivische Ansicht eines Ausführungsbeispiels der erfindungsgemäßen elektrischen Anlage mit zwei Funktionsmodulen gemäß Figur 1;
- Figur 3: eine weitere perspektivische Ansicht eines Ausführungsbeispiels der erfindungsgemäßen elektrischen Anlage mit zwei Funktionsmodulen gemäß Figur 2.

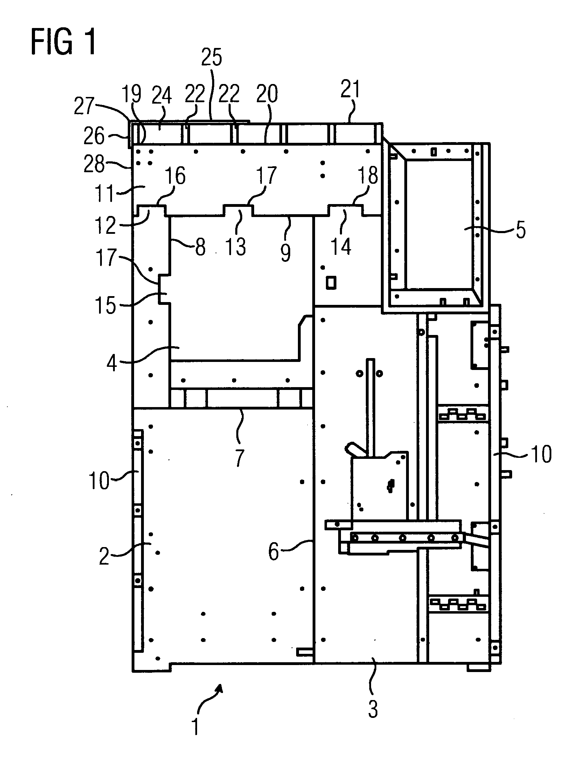

Das in Figur 1 dargestellte Funktionsmodul 1 umfasst mehrere Funktionsräume 2, 3, 4, 5, welche als Anschlussraum 2, als Leistungsschalter 3 bzw. als Sammelschienenraum 4 ausgebildet sind. Die Funktionsräume 2, 3, 4, 5 sind über Schottwände 6, 7, 8, 9 abgetrennt, wobei das Funktionsmodul 1 mittels Außenwänden 10 gegenüber der Umgebung gekapselt ist. An dem Funktionsmodul ist ein Druckentlastungskanal 11 angeordnet, welcher mit den Funktionsräumen 2, 3, 4 über Einströmöffnungen 12 bis 15 in der Schottwand 9 zum Gasaustausch in Verbindung steht. Die Einströmöffnungen 12, 13, 14, 15 sind dabei mittels Klappensystemen 16, 17, 18 abgedeckt, wobei die Klappensysteme 16, 17, 18 durch lose auf den Einströmöffnungen liegende Klappen oder an einer Seite an der Schottwand 9 befestigte Klappen ausgebildet sind, so dass eine auftretende Druckwelle die Klappen öffnet und eine Gasströmung in den Druckentlastungskanal gelangen kann. An seiner den Einströmöffnungen gegenüberliegenden Dachseite 19 wird der Druckentlastungskanal 11 durch ein Prellblech 20 begrenzt, an welchem Prellblech 20 ein Abdeckblech 21 beabstandet über Stege 22 befestigt ist. Die Breite des Prellbleches 20 ist dabei so gewählt, dass sie kleiner ist als die Breite des Funktionsmoduls, so dass im Bereich der Dachseite 19 des Druckentlastungskanals 11 Austrittsschlitze 23 ausgebildet sind, welche durch das Abdeckblech 21 nach oben beabstandet unter Ausbildung von Austrittsöffnungen 24 abgedeckt werden. Über den Abdeckblechen erstreckt sich zumindest teilweise über den Druckentlastungskanal 11 hinweg eine Ablenkplatte 25, welche mittels einen Befestigungsbereiches 26 an der elektrischen Anlage befestigt ist, wobei eine Sollbiegestelle 27 zwischen der Ablenkplatte 25 und dem Befestigungsbereich 26 vorgesehen ist, entlang derer sich die Ablenkplatte 25 biegen kann. Die Sollbiegestelle ist beispielsweise durch eine Materialschwächung, eine Prägung, Perforation oder ähnliches realisiert. Die Ablenkplatte 25 ist im Ausführungsbeispiel der Figur 1 an einer Rückwand 28 der elektrischen Anlage befestigt, kann aber auch an einer Vorderseite und/oder im Falle von mehreren Ablenkplatten an Seitenbereichen der elektrischen Anlage befestigt sein.

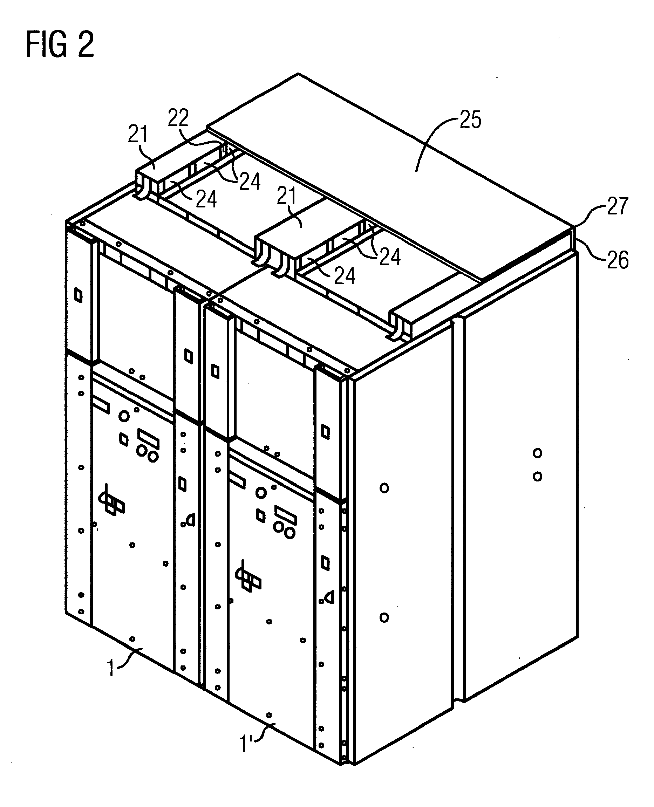

Figur 2 zeigt eine erfindungsgemäße elektrische Anlage mit einem Druckentlastungskanal 11, welcher sich quer zu zwei nebeneinander angeordneten Funktionsmodulen 1, 1' entlang der gesamten Anlage erstreckt. Es ist selbstverständlich, dass im Rahmen der Erfindung eine derartige Anlage eine Vielzahl von Funktionsmodulen 1, 1' umfassen kann. Auf der Dachseite 19 des Druckentlastungskanals 11 ist dieser durch die Prellbleche 20, 20' begrenzt, wobei durch die geringere Breite der Prellfläche 20, 10' bezüglich der Breite der Funktionsmodule 1, 1' zwischen den Prellblechen 20, 20' benachbarter Funktionsmodule 1, 1' bzw. zwischen einer ersten Gehäusewand 25 und dem ersten Funktionsmodul 1 der Anlage sowie einer zweiten Gehäusewand 26 und dem letzten Funktionsmodul 1' der Anlage Austrittsschlitze 23, 23' ausgebildet sind. Über den jeweiligen Austrittsschlitzen 23, 23' sind die Abdeckbleche 21, 21' beabstandet angeordnet, und zwar dergestalt, dass Abdeckbleche, welche einen zwischen zwei Prellblechen ausgebildeten Austrittsschlitz abdecken, an beiden jeweiligen Prellblechen mittels der Stege 22 befestigt sind, und Abdeckbleche, welche endseitige Austrittsschlitze am Rand der Anlage, also zwischen dem jeweils ersten bzw. letzten Funktionsmodul 1 bzw. 1' und einer ersten bzw. zweiten Gehäusewand 25 bzw. 26, abdecken, jeweils an dem zugeordneten Prellblech und der jeweiligen Gehäusewand befestigt sind. Die Befestigung kann dabei mittels einer Verschraubung der Stege oder durch Schweißen oder ähnliche Befestigungsmaßnahmen ausgebildet werden. Die nach oben beabstandet angeordneten Abdeckbleche 21, 21' decken die Austrittsschlitze 23, 23' unter Ausbildung der seitlichen Austrittsöffnungen 24 ab. Die Ablenkplatte 25 erstreckt sich über den Druckentlastungskanal 11 zumindest teilweise, im Ausführungsbeispiel etwa von der Rückwand 28 der elektrischen Anlage bis in einen mittleren Bereich des Druckentlastungskanals.

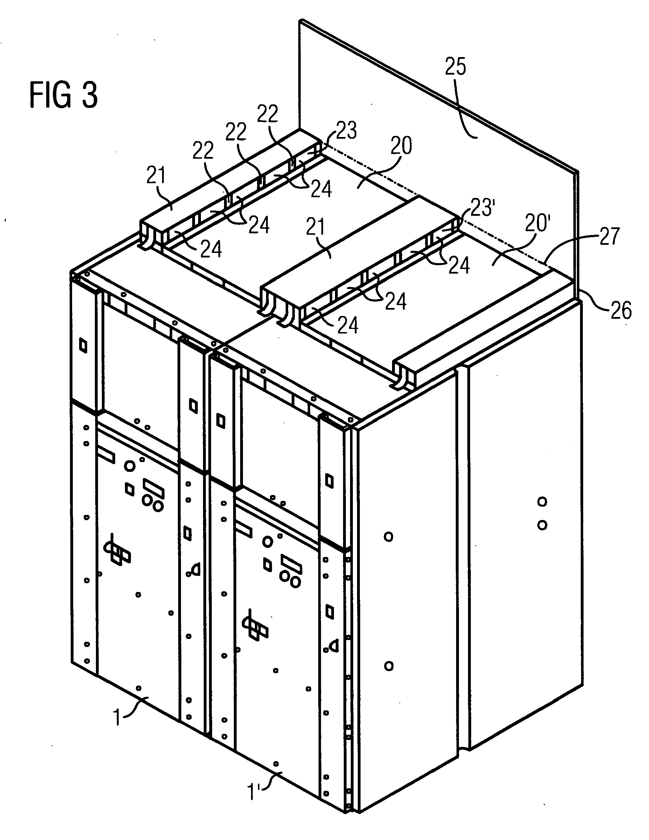

Bei einer Störung in einem der Funktionsräume 2, 3, 4, 5 und einem daraus resultierenden Lichtbogen wird durch den entstehenden Druck und die hohe Temperatur des Gases das entsprechende Klappensystem 16, 17, 18 der Einströmöffnungen 12 bis 15 geöffnet, so dass das heiße Gas in den Druckentlastungskanal 11 entweichen kann, wobei der Druckentlastungskanal 11 zunächst als Expansionsvolumen für das heiße Gas dient. Durch die an der Dachseite 19 angeordneten Prellbleche 20 wird dabei die auftretende Druckenergie in Verformungsenergie umgewandelt und somit abgebaut, indem sich die Prellbleche 20, 20' tonnenartig verformen. Ferner kann über die zwischen benachbarten Prellblechen ausgebildeten Austrittsschlitze 23, 23' das heiße Gas in die Umgebung entweichen, wobei durch die Abdeckbleche 21, 21' eine Streuung des heißen Gases gewährleistet ist, so dass sowohl die Anlage als auch Personen, welche sich in der Umgebung der Anlage befinden, vor dem heiβen Gas geschützt sind. Durch den Abstand zwischen den Abdeckblechen 21, 21' und den Austrittsschlitzen 23, 23', welcher typischerweise bei etwa 50 mm liegt, ist einerseits ein direktes Zurückreflektieren des Gasstromes in den Druckentlastungskanal 11 unterbunden, und andererseits wird ein gerichtetes Austreten des heißen Gases verhindert, so dass auch eine Reflektion des heißen Gases beispielsweise an der Decke eines umgebenden Raumes verhindert ist. Die Ablenkplatte 25 wird dabei durch den Gasstrom oder mit anderen Worten einen Druckstoß entlang der Sollbiegestelle 27 in eine senkrechte Position überführt, wodurch die heißen Gase nach oben gelenkt werden und eine Gefährdung für Personen im Umgebungsbereich weiter reduziert ist. Figur 3 zeigt die erfindungsgemäße elektrische Anlage mit der Ablenkplatte 25 in einer nach oben gerichteten Position nach einem durch einen Lichtbogen innerhalb der elektrischen Anlage verursachten Druckstoß.

Bei dem dargestellten Ausführungsbeispiel ist der Druckentlastungskanal 11 an seinen Endseiten zunächst offen und wird bei der Montage der elektrischen Anlage durch nach oben hervorstehende Enden der Gehäusewände 29 und 30 verschlossen.

In Abweichung kann der Druckentlastungskanal auch für sich montiert an seinen beiden Enden durch Kanalverschlussbleche verschlossen sein. In diesem Fall bedarf es keiner nach oben hervorstehenden Gehäusewände an äußeren Funktionsmodulen.

### Bezugszeichenliste

- 1, 1': Funktionsmodul
- 2: Anschlussraum
- 3: Leistungsschalterraum
- 4: Sammelschienenraum
- 5: Funktionsraum
- 6, 7, 8, 9: Schottwand
- 10: Außenwand
- 11: Druckentlastungskanal
- 12, 13, 14, 15: Einströmöffnungen
- 16, 17, 18: Klappensysteme
- 19: Dachseite
- 20: Prellblech
- 21: Abdeckblech
- 22: Steg
- 23, 23': Austrittsschlitze
- 24: Austrittsöffnungen
- 25: Ablenkplatte
- 26: Befestigungsbereich
- 27: Sollbiegestelle
- 28: Rückwand
- 29: erste Gehäusewand
- 30: zweite Gehäusewand

## Patentansprüche

1. Elektrische Anlage, insbesondere Mittelspannungsschaltanlage, mit mindestens einem metallgekapselten Funktionsmodul (1,1') und einem sich parallel zu einer Frontseite der elektrischen Anlage erstreckenden, jeweils endseitig geschlossenen Druckentlastungskanal (11) mit mindestens einer bodenseitigen Einströmöffnung (12,13,14,15) zur Verbindung des jeweiligen Funktionsmoduls (1,1') mit dem Druckentlastungskanal (11) sowie mehreren quer zu dem Druckentlastungskanal (11) verlaufenden Austrittsschlitzen, welche mittels über den Austrittsschlitzen (23, 23') beabstandet angeordneter Abdeckbleche (21, 21') mit einer Breite, die gleich der Breite der Austrittsschlitze (23, 23') ist, abgedeckt sind,
**dadurch gekennzeichnet, dass**
mindestens eine Ablenkplatte (25) an der elektrischen Anlage oder dem Druckentlastungskanal (11) befestigt ist, den Druckentlastungskanal (11) teilweise abdeckt und über eine Sollbiegestelle (27) verfügt.

2. Elektrische Anlage nach Anspruch 1,
**dadurch gekennzeichnet, dass**
die Sollbiegestelle (27) zum Biegen der mindestens einen Ablenkplatte (25) bis zu einer senkrechten Position beim Auftreten eines Druckstoßes in der elektrischen Anlage ausgebildet ist.

3. Elektrische Anlage nach Anspruch 1 oder 2,
**dadurch gekennzeichnet, dass**
der Druckentlastungskanal (11) an den Seitenbereichen jedes Funktionsmoduls (1, 1') jeweils einen Austrittsschlitz (23, 23') aufweist.

4. Elektrische Anlage nach Anspruch 3,
**dadurch gekennzeichnet, dass**
die Austrittsschlitze (23, 23') zwischen benachbarten Funktionsmodulen (1, 1') mittels eines gemeinsamen Abdeckblechs (21) abgedeckt sind.

5. Elektrische Anlage nach einem der Ansprüche 1 bis 4,
**dadurch gekennzeichnet, dass**
eine Dachseite (19) des Druckentlastungskanals (11) jeweils ein Prellblech (20, 20') für jedes Funktionsmodul (1, 1') aufweist, und jedes Prellblech (20, 20') eine geringere Breite als die Breite der Funktionsmodule (1, 1') aufweist.

6. Elektrische Anlage nach Anspruch 5,
**dadurch gekennzeichnet, dass**
die Prellbleche (20, 20') den Druckentlastungskanal (11) front- und rückseitig abdichtend angebracht sind und derart angeordnet sind, dass sie jeweils mittig bezüglich der Frontseite der Funktionsmodule (1, 1') liegen.

7. Elektrische Anlage nach einem der Ansprüche 5 oder 6,
**dadurch gekennzeichnet, dass**
die Abdeckbleche (21, 21') jeweils mittels einer Vielzahl von Stegen (22) unter Ausbildung von seitlichen Austrittsöffnungen (24) an den Prellblechen (20, 20') befestigt sind und an endseitigen Abdeckblechen des Druckentlastungskanals (11) Kanalverschlussbleche angebracht sind.

8. Elektrische Anlage nach Anspruch 7,
**dadurch gekennzeichnet, dass**
die Kanalverschlussbleche von Teilen der Gehäusewände des mindestens einen Funktionsmoduls (1, 1') gebildet sind.

9. Elektrische Anlage nach einem der Ansprüche 1 bis 8,
**dadurch gekennzeichnet, dass**
der Druckentlastungskanal (11) einen Boden mit der mindestens einen bodenseitigen Einströmöffnung aufweist und der Druckentlastungskanal (11) mit seinem Boden fest mit dem mindestens einen Funktionsmodul (1, 1') verbunden ist.

10. Elektrische Anlage nach einem der Ansprüche 4 bis 8,
**dadurch gekennzeichnet, dass**
ein vertikaler Abstand zwischen dem jeweiligen Abdeckblech (21, 21') und den zugeordneten Prellblechen (20, 20') zwischen 40 mm und 60 mm liegt.

11. Elektrische Anlage nach einem der Ansprüche 4 bis 8,
**dadurch gekennzeichnet, dass**
der vertikale Abstand zwischen dem jeweiligen Abdeckblech (21, 21') und den zugeordneten Prellblechen (20, 20') 50 mm beträgt.

12. Elektrische Anlage nach einem der Ansprüche 4 bis 11,
**dadurch gekennzeichnet, dass** die Prellbleche (20, 20') eine Stärke von 2 mm aufweisen.

13. Elektrische Anlage nach einem der vorangehenden Ansprüche,
**dadurch gekennzeichnet, dass** der
Druckentlastungskanal (11) einen rechteckigen Querschnitt aufweist.

## Claims

1. Electrical installation, in a particular a medium-voltage switchgear assembly, having at least one metal-encapsulated functional module (1, 1') and a pressure relief channel (11), which extends parallel to a front face of the electrical installation and is closed at each of the ends, having at least one inlet-flow opening (12, 13, 14, 15) on the bottom face for connection of the respective functional module (1, 1') to the pressure relief channel (11) and to a plurality of outlet slots which run transversely with respect to the pressure relief channel (11) and are covered by means of metal covering sheets (21, 21') which are arranged at a distance above the outlet slots (23, 23') and have a width which is equal to the width of the outlet slots (23, 23'), **characterized in that** at least one deflection plate (25) is attached to the electrical installation or to the pressure relief channel (11), partially covers the pressure relief channel (11) and has a weak bending point (27).

2. Electrical installation according to Claim 1, **characterized in that** the weak bending point (27) is designed for bending the at least one deflection plate (25) as far as a vertical position when a pressure surge occurs in the electrical installation.

3. Electrical installation according to Claim 1 or 2,
**characterized in that** the pressure relief channel (11) has an outlet slot (23, 23') on each of the side areas of each functional module (1, 1').

4. Electrical installation according to Claim 3, **characterized in that** the outlet slots (23, 23') between adjacent functional modules (1, 1') are covered by means of a common metal covering sheet (21).

5. Electrical installation according to one of Claims 1 to 4, **characterized in that** a roof face (19) of the pressure relief channel (11) in each case has a baffle plate (20, 20') for each functional module (1, 1'), and each baffle plate (20, 20') has a narrower width than the width of the functional modules (1, 1').

6. Electrical installation according to Claim 5, **characterized in that** the baffle plates (20, 20') are fitted, forming a seal, to the front and rear faces of the pressure relief channel (11), and are arranged such that they are each located centrally with respect to the front face of the functional modules (1, 1').

7. Electrical installation according to one of Claims 5 or 6, **characterized in that** the metal covering sheets (21, 21') are each attached to the baffle plates (20, 20') by means of a multiplicity of webs (22), forming side outlet openings (24), and metal channel closure sheets are fitted to end metal covering sheets of the pressure relief channel (11).

8. Electrical installation according to Claim 7,
**characterized in that** the metal channel closure sheets are formed by parts of the housing walls of the at least one functional module (1, 1').

9. Electrical installation according to one of Claims 1 to 8, **characterized in that** the pressure relief channel (11) has a bottom with the at least one inlet-flow opening on the bottom face, and the pressure relief channel (11) is firmly connected by its bottom to the at least one functional module (1, 1').

10. Electrical installation according to one of Claims 4 to 8, **characterized in that** a vertical distance between the respective metal covering sheet (21, 21') and the associated baffle plates (20, 20') is between 40 mm and 60 mm.

11. Electrical installation according to one of Claims 4 to 8, **characterized in that** the vertical distance between the respective metal covering sheet (21, 21') and the associated baffle plates (20, 20') is 50 mm.

12. Electrical installation according to one of Claims 4 to 11, **characterized in that** the baffle plates (20, 20') have a thickness of 2 mm.

13. Electrical installation according to one of the preceding claims, **characterized in that** the pressure relief channel (11) has a rectangular cross section.

## Revendications

1. Installation électrique, notamment, installation de distribution, comprenant au moins un module ( 1, 1') fonctionnel encapsulé et un canal ( 11 ) de détente de la pression, qui s'étend parallèlement à un côté avant de l'installation électrique, qui est fermé respectivement du côté de l'extrémité et qui a au moins une ouverture ( 12, 13, 14, 15 ) d'entrée du côté du fond pour mettre le module ( 1, 1' ) fonctionnel respectif en communication avec le canal ( 11 ) de détente de la pression ainsi que plusieurs fentes de sortie, qui s'étendent transversalement au canal ( 11 ) de détente de la pression et qui sont recouvertes au moyen de tôles ( 21, 21' ) de recouvrement disposées à distance au-dessus des fentes ( 23, 23' ) de sortie et de même largeur que les fentes ( 23, 23' ) de sortie,
**caractérisée en ce que**
au moins une plaque ( 25 ) de déviation est fixée à l'installation électrique ou au canal ( 11 ) de détente de la pression, recouvre en partie le canal ( 11 ) de la pression et dispose d'un point ( 27 ) destiné à se plier.

2. Installation électrique suivant la revendication 1,
**caractérisée en ce que**
le point ( 27 ) destiné à se plier est constitué pour plier la au moins une plaque ( 25 ) de déviation jusqu'à une position verticale lorsque se produit un coup de bélier dans l'installation électrique.

3. Installation électrique suivant la revendication 1 ou 2,
**caractérisée en ce que**
le canal ( 11 ) de détente de la pression a respectivement une fente ( 23, 23' ) de sortie sur les parties latérales de chaque module ( 1, 1' ) fonctionnel.

4. Installation électrique suivant la revendication 3,
**caractérisée en ce que**
les fentes ( 23, 23' ) de sortie sont recouvertes entre des modules ( 1, 1' ) fonctionnels voisins au moyen d'une tôle ( 21 ) de recouvrement commune.

5. Installation électrique suivant l'une des revendications 1 à 4,
**caractérisée en ce que**
un côté ( 19 ) de toit du canal ( 11 ) de détente de la pression a respectivement une tôle ( 20, 20' ) de rebondissement pour chaque module ( 1, 1' ) fonctionnel et chaque tôle ( 20, 20' ) de rebondissement a une largeur plus petite que celle du module ( 1, 1' ) fonctionnel.

6. Installation électrique suivant la revendication 5,
**caractérisée en ce que**
les tôles ( 20, 20' ) de rebondissement sont mises d'une manière étanche du côté avant et arrière sur le canal ( 11 ) de détente de la pression et sont disposées de manière à se trouver respectivement au milieu par rapport au côté avant du module ( 1, 1' ) fonctionnel.

7. Installation électrique suivant l'une des revendications 5 ou 6,
**caractérisée en ce que**
les tôles ( 21, 21' ) de recouvrement sont fixées respectivement au moyen d'une pluralité de barrettes ( 22 ) aux tôles ( 20, 20' ) de rebondissement avec formation d'ouvertures ( 24 ) latérales de sortie et des tôles de fermeture de canal sont mises sur des tôles de recouvrement du côté de l'extrémité du canal ( 11 ) de détente de la pression.

8. Installation électrique suivant la revendication 7,
**caractérisée en ce que**
les tôles de fermeture de canal sont formées par des parties des parois du boîtier du au moins un module ( 1, 1' ) fonctionnel.

9. Installation électrique suivant l'une des revendications 1 à 8,
**caractérisée en ce que**
le canal ( 11 ) de détente de la pression a un fond ayant au moins une ouverture d'entrée du côté du fond et le canal ( 11 ) de détente de la pression est assemblé par son fond solidement au au moins un module ( 1, 1' ) fonctionnel.

10. Installation électrique suivant l'une des revendications 4 à 8,
**caractérisée en ce que**
une distance verticale entre la tôle ( 21, 21' ) de recouvrement respective et les tôles ( 20, 20' ) de rebondissement associées est comprise entre 40 mm et 60 mm.

11. Installation électrique suivant l'une des revendications 4 à 8,
**caractérisée en ce que**
la distance verticale entre la tôle ( 21, 21' ) de recouvrement respective et les tôles ( 20, 20' ) de rebondissement associée est de 50 mm.

12. Installation électrique suivant l'une des revendications 4 à 11,
**caractérisée en ce que**
les tôles ( 20, 20' ) de rebondissement ont une épaisseur de 2 mm.

13. Installation électrique suivant l'une des revendications précédentes,
**caractérisée en ce que**
le canal ( 11 ) de détente de la pression a une section transversale rectangulaire.
